(19) Europäisches Patentamt
European Patent Office
Office européen des brevets

(11) **EP 2 693 753 A1**

(12) **EUROPEAN PATENT APPLICATION**

(43) Date of publication:
**05.02.2014 Bulletin 2014/06**

(51) Int Cl.:
*H04N 7/32* (2006.01)   *H04N 13/00* (2006.01)
*H04N 7/46* (2006.01)

(21) Application number: **13177854.0**

(22) Date of filing: **24.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.07.2012 KR 20120083953**

(71) Applicant: **Samsung Electronics Co., Ltd Gyeonggi-do 443-742 (KR)**

(72) Inventors:
• **Lee, Mi-yeon**
  **Gyeonggi-do (KR)**
• **Han, Seung-hoon**
  **Gyeonggi-do (KR)**

(74) Representative: **Walaski, Jan Filip**
  **Venner Shipley LLP**
  **200 Aldersgate**
  **London**
  **EC1A 4HD (GB)**

(54) **Method of converting 2-dimension images into 3-dimension images and display apparatus thereof**

(57)    A method of converting 2-dimension (2D) image into a 3-dimension (3D) image and a display apparatus. The method may include generating a depth frame of key frames of a plurality of image frames, calculating a motion vector between the image frames, interpolating an intermediate depth frame corresponding to intermediate frames between the key frames by using the depth frame and the motion vector, and generating left and right eye images of the plurality of image frames by using the depth frame and the interpolated depth frame. Therefore, the display apparatus minimizes occurrences of errors and generates a depth frame approximate to a real depth frame.

## FIG. 4

**Description**

The present invention relates to a 3-dimensional (3D) image converting method and a display apparatus thereof, and more particularly, to a method of converting a 2-dimensional (2D) image including a plurality of image frames into a 3D image, and a display apparatus thereof.

Three-dimensional (3D) image technology is relevant in a wide range of applications in information and communications, broadcasting, medical services, education, training, the military, games, animation, virtual reality, computer-aided design (CAD), industrial technology, etc. The 3D image technology may be a core technology of a next generation 3D stereoscopic multimedia information communication.

With respect to 3D image technology, in particular, a 3D image may be provided to a display apparatus (e.g., a TV) to provide a variety of viewing environments to a user. In order to provide a 3D image to a user, a display apparatus is to receive image data having a 3D image format. However, a recent display apparatus converts input image data having a 2D image format into a 3D image format to provide a 3D image to a user.

In order to convert the image data having the 2D image format into the 3D image format, a depth frame (or a depth map) indicating depth information of a 2D image is to be generated. In order to generate the depth frame, several methods may be used; namely, a method of using a depth camera, a method of generating a depth frame of each image frame by using spatial characteristics of an image frame (e.g., a size, an arrangement, a moving speed, etc. of an object), a method of generating a depth frame from a particular image frame and sequentially generating depth frames of other image frames from the depth frame by using a temporal interpolation method, etc.

However, the method of using the depth camera may include an additional depth camera. In addition, in the method of generating the depth frame of each image frame by using the spatial characteristics of the image frame, the depth frame of each of the image frames is to be generated, and thus, excessive operation processing is performed. Also, in the method of sequentially generating the depth frames of the other image frames by using the temporal interpolation method, if an error occurs when generating the depth frames, errors are gradually accumulated.

Therefore, there is a need for an improved method and apparatus for converting 2D image data into 3D image data.

Additional aspects and/or advantages will be set forth in part in the description which follows and, in part, will be apparent from the description, or may be learned by practice of the invention.

Exemplary embodiments address at least the above problems and/or disadvantages and other disadvantages not described above. In addition, the exemplary embodiments are not required to overcome the disadvantages described above, and an exemplary embodiment may not overcome any of the problems described above.

The exemplary embodiments provide a method for interpolating an intermediate depth frame corresponding to an intermediate frame between key frames by using a depth frame corresponding to a key frame of a plurality of image frames to prevent errors from being accumulated and to generate a depth frame approximate to a real depth frame, and a display apparatus thereof.

According to an aspect of the exemplary embodiments, there is provided a 3-dimensional (3D) image converting method of a display apparatus. The 3D image converting method may include generating a depth frame of key frames, of the key frames being from a plurality of image frames; calculating a motion vector between the image frames, interpolating an intermediate depth frame corresponding to intermediate frames between the key frames by using the depth frame and the motion vector, and generating left and right eye images of the plurality of image frames by using the depth frame and the interpolated depth frame.

The interpolating of the intermediate depth frame may include: comparing a first motion vector between an intermediate frame between first and second key frames of the image frames and the first key frame with a second motion vector between the intermediate frame and the second key frame, calculating a first weight of a first depth frame corresponding to the first key frame and a second weight of a second depth frame corresponding to the second key frame according to the comparison result, and reflecting the first weight on the first depth frame and the second weight on the second depth frame to interpolate an intermediate depth frame between the first and second depth frames.

The first weight may be calculated using the following equation:

$$w1 = \frac{mv2}{mv1 + mv2},$$

wherein $w1$ represents the first weight, $mv1$ represents the first motion vector, and $mv2$ represents the second motion vector.

The first and second weights may be respectively inversely proportional to sizes of the first and second motion vectors.

If a plurality of intermediate frames exists between first and second key frames, the interpolating of the intermediate depth frame may include hierarchically interpolating intermediate depth frames corresponding to the plurality of intermediate frames.

If first, second, and third intermediate frames exist between the first and second key frames, the interpolating of the intermediate depth frame may include interpolating a second intermediate depth frame corresponding to the second intermediate frame by using a first depth frame corresponding to the first key frame, a second depth frame corresponding to the second key frame, a motion vector between the first key frame and the second intermediate frame, and a motion vector between the second key frame and the second intermediate frame, interpolating a first intermediate depth frame corresponding to the first intermediate frame by using the first depth frame, the second intermediate depth frame, a motion vector between the first key frame and the first intermediate frame, and a motion vector between the second intermediate frame and the first intermediate frame; and interpolating a third intermediate depth frame corresponding to the third intermediate frame by using the second depth frame, a second intermediate depth frame, a motion vector between the second intermediate frame and the third intermediate frame, and a motion vector between the third intermediate frame and the second key frame.

If first and second intermediate frames exist between the first and second key frames, the interpolating of the intermediate frame may include interpolating a first intermediate depth frame corresponding to the first intermediate frame by using a first depth frame corresponding to the first key frame, a second depth frame corresponding to the second key frame, a motion vector between the first key frame and the first intermediate frame, and a motion vector between the second key frame and the first intermediate frame, and interpolating a second intermediate depth frame corresponding to the second intermediate frame by using the first intermediate depth frame, the second depth frame, a motion vector between the first and second intermediate frames, and a motion vector between the second intermediate frame and the second key frame.

The 3D image converting method may further include: selecting one of the plurality of image frames as the key frame the every preset number of image frames.

According to another aspect of the exemplary embodiments, there is provided a display apparatus which converts a 2-dimensional (2D) image into a 3D image. The display apparatus may include a depth frame generator that generates a depth frame of key frames of a plurality of image frames, a motion vector calculator that calculates a motion vector between the image frames; an intermediate depth interpolator that interpolates an intermediate depth frame corresponding to intermediate frames between the key frames by using the depth frame and the motion vector, and a 3D image generator that generates left and right eye images of the plurality of image frames by using the depth frame and the interpolated depth frame.

The intermediate depth interpolator may compare a first motion vector between an intermediate frame between first and second key frames of the image frames and the first key frame with a second motion vector between the intermediate frame and the second key frame to calculate a first weight of a first depth frame corresponding to the first key frame and a second weight of a second depth frame corresponding to the second key frame and reflect the first weight on the first depth frame and the second weight on the second depth frame to interpolate an intermediate depth frame between the first and second depth frames.

The first and second weights may be respectively inversely proportional to sizes of the first and second motion vectors.

If a plurality of intermediate frames exist between first and second key frames, the intermediate depth interpolator may hierarchically interpolate intermediate depth frames corresponding to the plurality of intermediate frames.

If first, second, and third intermediate frames exist between the first and second key frames, the intermediate depth interpolator may interpolate a second intermediate depth frame corresponding to the second intermediate frame by using a first depth frame corresponding to the first key frame, a second depth frame corresponding to the second key frame, a motion vector between the first key frame and the second intermediate frame, and a motion vector between the second key frame and the second intermediate frame, interpolate a first intermediate depth frame corresponding to the first intermediate frame by using the first depth frame, the second intermediate depth frame, a motion vector between the first key frame and the first intermediate frame, and a motion vector between the second intermediate frame and the first intermediate frame, and interpolate a third intermediate depth frame corresponding to the third intermediate frame by using the second depth frame, a second intermediate depth frame, a motion vector between the second intermediate frame and the third intermediate frame, and a motion vector between the third intermediate frame and the second key frame.

If first and second intermediate frames exist between the first and second key frames, the intermediate depth interpolator may interpolate a first intermediate depth frame corresponding to the first intermediate frame by using a first depth frame corresponding to the first key frame, a second depth frame corresponding to the second key frame, a motion vector between the first key frame and the first intermediate frame, and a motion vector between the second key frame and the first intermediate frame and interpolate a second intermediate depth frame corresponding to the second intermediate frame by using the first intermediate depth frame the second depth frame, a motion vector between the first and second intermediate frames, and a motion vector between the second intermediate frame and the second key frame.

The depth frame generator may select one of the plurality of image frames as the key frame for every preset number of image frames to generate a depth frame.

The depth frame generator may select one of the plurality of image frames as the key frame over irregular intervals to generate a depth frame.

According to another aspect of the exemplary embodiments, there is provided an image conversion method, the method including: generating a depth frame of a key frame; and interpolating an intermediate depth frame, between at least two generated depth frames, using the generated depth frame.

The above and/or other aspects will be more apparent by describing certain exemplary embodiments with reference to the accompanying drawings, in which:

FIG. 1 is a block diagram illustrating a structure of a display apparatus, according to an exemplary embodiment of the present disclosure;
FIG. 2 is a view illustrating a method of generating a depth frame corresponding to a key frame of a plurality of image frames, according to an exemplary embodiment of the present disclosure;
FIG. 3 is a view illustrating a method of generating an intermediate depth frame by using a depth frame corresponding to a key frame and a motion vector, according to an exemplary embodiment of the present disclosure;
FIG. 4 is a view illustrating a method of generating an intermediate depth frame corresponding an intermediate frame if three intermediate frames exist between key frames, according to an exemplary embodiment of the present disclosure;
FIG. 5 is a view illustrating a method of generating an intermediate depth frame corresponding to an intermediate frame if two intermediate frames exist between key frames, according to an exemplary embodiment of the present disclosure; and
FIG. 6 is a flowchart illustrating a 3-dimensional (3D) image converting method according to an exemplary embodiment of the present disclosure.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. In addition, well-known functions or constructions are not described in detail since they would obscure the exemplary embodiments with unnecessary detail.

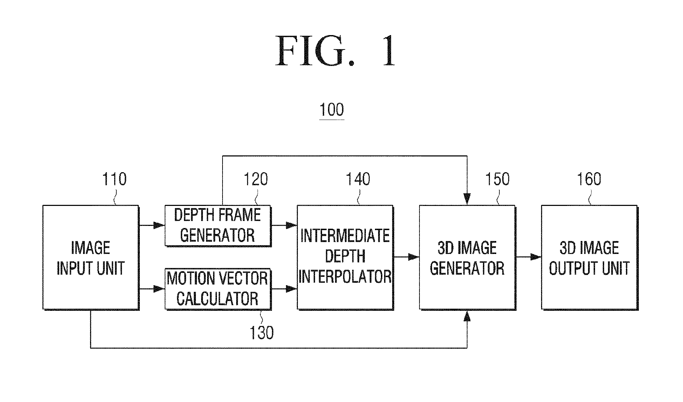

FIG. 1 is a block diagram illustrating a structure of a display apparatus 100, according to an exemplary embodiment of the present disclosure.

As illustrated in FIG. 1, the display apparatus 100 comprises an image input unit 110, a depth frame generator 120, a motion vector calculator 130, an intermediate depth interpolator 140, a 3D image generator 150, and a 3D image output unit 160. In this case, the display apparatus 100 may be realized as a smart TV, however, the present disclosure is not limited thereto. That is, the display apparatus 100 may be realized as various apparatuses such as a tablet PC, a monitor, and a projection TV, and the like.

An image input unit 110 receives image data. As an example, the image input unit 110 may receive image data from an external broadcasting station or an external device or may receive image data stored in a storage unit (not shown).

For example, the image data input into the image input unit 110 may include a plurality of image frames.

A depth frame generator 120 generates depth frames of key frames of the plurality of image frames which were input into the image input unit 110. For example, a depth frame refers to a frame having depth information of input image frames and may be expressed with grayscales from 0 to 255. As an example, as a depth of an object of an image frame is high, a grayscale of the object is approximate to 255. As the depth of the object is low, the grayscale of the object is approximate to 0.

A method of generating a depth frame through the depth frame generator 120 will now be described in detail. The depth frame generator 120 may select a key frame from the plurality of image frames input through the image input unit 110.

For example, the depth frame generator 120 may select key frames from the plurality of image frames at preset frame intervals. For instance, if the image data including the plurality of image frames is received, the depth frame generator 120 may select key frames at 4 frame intervals. However, the depth frame generator 120 may generate depth frames at other preset intervals, but this is only exemplary, and thus, the present disclosure is not limited thereto. Further, the depth frame generator 120 may generate depth frames at irregular intervals.

The depth frame generator 120 also generates a depth frame of the selected key frame. For instance, the depth frame generator 120 analyzes spatial characteristics of the key frame (e.g., a size, an arrangement, a motion, a moving speed, etc. of an object) to generate the depth frame. For example, the depth frame generator 120 may determine that, as the size of the object is great, a depth is high; determine that, as the object is arranged downwards, the depth is high; or determine that, if the object is being moved, the depth is high. However, the analysis of the spatial characteristics of the key fame through the depth frame generator 120 to generate the depth frame is only exemplary, and thus, the present disclosure is not limited thereto. Therefore, the depth frame generator 120 may generate the depth frame according to another method. For example, a user may directly input depth information of key frames to generate a depth frame.

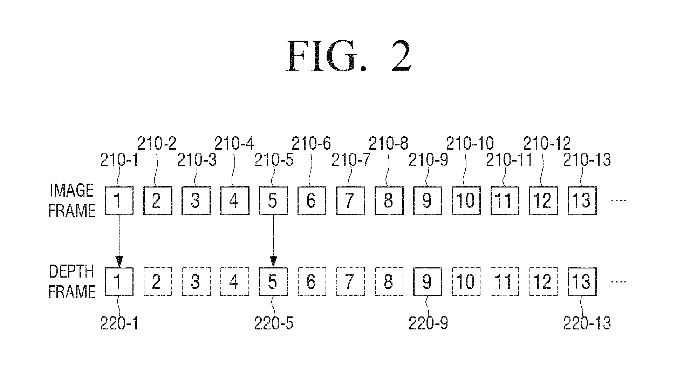

According to an exemplary embodiment of the present disclosure, as shown in FIG. 2, if a plurality of image frames 210-1, 210-2, 210-3, and so on, are input through the image input unit 110, the depth frame generator 120 selects key frames 210-1, 210-5, 210-9, and so on, at four frame intervals and generates depth frames 220-1, 220-5, 220-9, and so on, respectively corresponding to the selected key frames 210-1, 210-5, 210-9, and so on.

A motion vector calculator 130 may calculate a motion vector of the plurality of image frames input through the image input unit 110. For example, the motion vector may be a value of motion changes of blocks included in an image frame. If there are a large number of motions of blocks constituting an image frame, the motion vector calculator 130 may calculate a motion vector value as a high value. If there are a small number of motions of the blocks constituting the image frame, the motion vector 130 may calculate the motion vector value as a low value.

An intermediate depth interpolator 140 may interpolate an intermediate depth frame corresponding to intermediate frames between key frames by using the depth frame generated by the depth frame generator 120 and the motion vector calculated by the motion vector calculator 130.

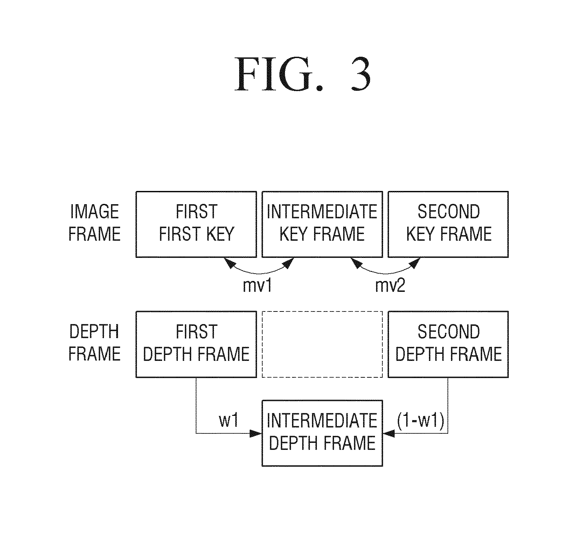

A method of interpolating the intermediate depth frame corresponding to the intermediate frames between the key frames through the intermediate depth interpolator 140 by using the depth frame and the motion vector will now be described with reference to FIG. 3.

If image data including a first key frame, an intermediate frame, and a second key frame is received, the intermediate depth interpolator 140 compares a first motion vector mv1 between the first key frame and the intermediate frame with a second motion vector mv2 between the intermediate frame and the second key frame.

Further, the intermediate depth interpolator 140 calculates a first weight w1 of a first depth frame and a second weight 1-w1 of a second depth frame, according to the comparison result between the first and second motion vectors, mv1 and mv2. For example, the first and second weights w1 and 1-w1 may be respectively inversely proportional to sizes of the first and second motion vectors mv1 and mv2. In other words, as a value of the first motion vector mv1 is high, the first weight w1 may gradually decrease. As a value of the second motion vector mv2 is high, the second weight 1-w1 may gradually increase. However, this is exemplary, and thus, the present disclosure is not limited thereto. For example, the first weight w1 may be calculated as in Equation 1 below.

$$w1 = \frac{mv2}{mv1 + mv2} \qquad ...(1)$$

If a motion vector is small, i.e., there is no motion, adjacent frames are similar to each other. Therefore, a weight may be highly calculated.

In addition, the second weight may be calculated by 1 minus the calculated w1.

The intermediate depth interpolator 140 may reflect the first weight w1 on the first depth frame and the second weight 1-w1 on the second depth frame to interpolate an intermediate depth frame between the first and second depth frames.

In particular, if a plurality of intermediate frames exists between the first and second key frames, the intermediate depth frame interpolator 140 may hierarchically interpolate intermediate depth frames corresponding to the plurality of intermediate frames.

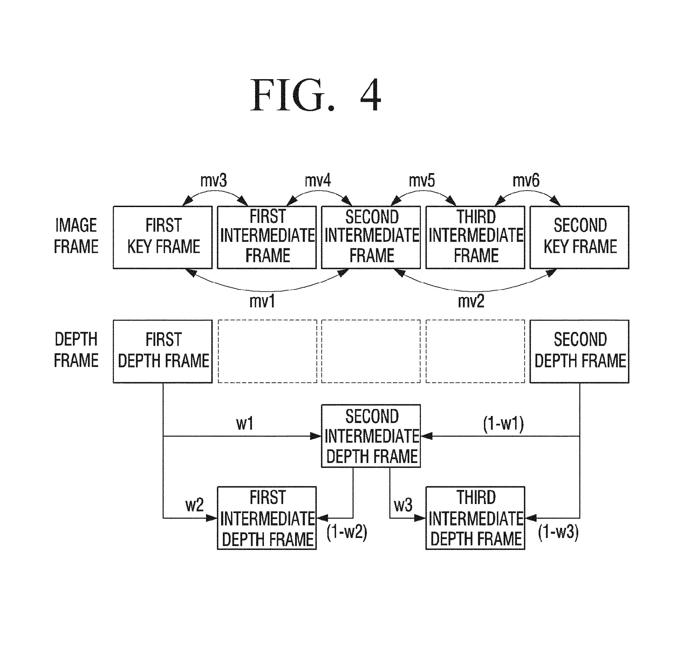

A method of generating an intermediate depth frame corresponding to an intermediate frame if three intermediate frames exist between first and second key frames, according to an exemplary embodiment of the present disclosure will now be described with reference to FIG. 4.

As shown in FIG. 4, if first, second, and third intermediate frames exist between first and second key frames, the intermediate depth interpolator 140 may interpolate a second intermediate depth frame corresponding to a second intermediate frame by using first and second depth frames, a first motion vector mv1 between the first key frame and the second intermediate frame, and a second motion vector mv2 between the second key frame and the second intermediate frame.

In detail, the intermediate depth interpolator 140 may compare the first motion vector mv1 between the first key frame and the second intermediate frame with the second motion vector mv2 between the second intermediate frame and the second key frame. The intermediate depth interpolator 140 may calculate a first weight w1 of the first depth frame and a second weight 1-w1 of the second depth frame, according to the comparison result between the first and second motion vectors, mv1 and mv2. The intermediate depth interpolator 140 may reflect the first weight w1 on the first depth frame and the second weight 1-w1 on the second depth frame to interpolate the second intermediate depth frame between the first and second depth frames.

After interpolating the second intermediate depth frame, the intermediate depth interpolator 140 may interpolate a first intermediate depth frame corresponding to the first intermediate frame by using the first and second depth frames, a third motion vector mv3 between the first key frame and the first intermediate frame, and a fourth motion vector mv4 between the second intermediate frame and the first intermediate frame.

In detail, the intermediate depth interpolator 140 may compare the third motion vector mv3 between the first key frame and the first intermediate frame with the fourth motion vector mv4 between the first and second intermediate frames. The intermediate depth interpolator 140 may calculate a third weight w2 of the first depth frame and a fourth weight 1-w2 of the second intermediate depth frame, according to the comparison between the third and fourth motion vectors, i.e., mv3 and mv4. The intermediate depth interpolator 140 may reflect the third weight w2 on the first depth frame and the fourth weight 1-w2 on the second intermediate depth frame to interpolate the first intermediate depth frame between the first depth frame and the second intermediate depth frame.

After interpolating the first intermediate depth frame, the intermediate depth interpolator 140 may interpolate a third intermediate depth frame, corresponding to a third intermediate frame by using the second depth frame, the second intermediate depth frame, a fifth motion vector mv5 between the second intermediate frame and the third intermediate frame, and a sixth motion vector mv6 between the third intermediate frame and the second key frame.

In detail, the intermediate depth interpolator 140 may compare the fifth motion vector mv5 between the second intermediate frame and the third intermediate frame with the sixth motion vector mv6 between the third intermediate frame and the second key frame. The intermediate depth interpolator 140 may calculate a fifth weight w3 of the second intermediate depth frame and a sixth weight 1-w3 of the second depth frame according to the comparison between the fifth and sixth motion vectors, i.e., mv5 and mv6. The intermediate depth interpolator 140 may reflect the fifth weight w3 on the second intermediate depth frame and the sixth weight 1-w3 on the second depth frame to interpolate the third intermediate depth frame between the second intermediate depth frame and the second depth frame.

Accordingly, as described with reference to FIG. 4, the intermediate depth interpolator 140 may hierarchically interpolate the second intermediate depth frame, the first intermediate depth frame, and the third intermediate depth frame by using the first and second depth frames.

However, the present disclosure is not limited the three intermediate frames, as shown in FIG. 4.

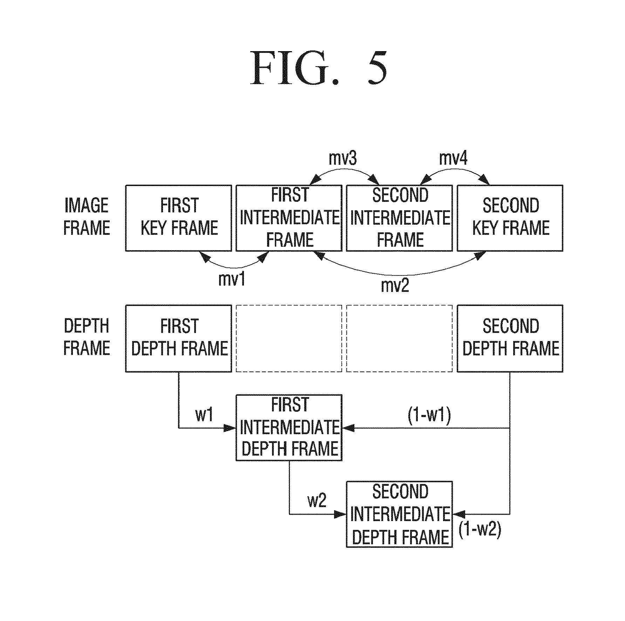

A method of generating an intermediate depth frame corresponding to an intermediate frame if two intermediate frames exist between first and second key frames according to an exemplary embodiment of the present disclosure will now be described with reference to FIG. 5.

As shown in FIG. 5, if first and second intermediate frames exist between first and second key frames, the intermediate depth interpolator 140 may interpolate a first intermediate depth frame corresponding to a first intermediate frame by using first and second depth frames, a first motion vector mv1 between the first key frame and the first intermediate frame, and a second motion vector mv2 between the second key frame and the first intermediate frame.

In detail, the intermediate depth interpolator 140 may compare the first motion vector mv1 between the first key frame and the first intermediate frame with the second motion vector mv2 between the first intermediate frame and the second key frame. The intermediate depth interpolator 140 may calculate a first weight w1 of a first depth frame and a second weight 1-w1 of a second depth frame, according to the comparison result between the first and second motion vectors, mv1 and mv2. The intermediate depth interpolator 140 may reflect the first weight w1 on the first depth frame and the second weight 1-w1 on the second depth frame to interpolate the first intermediate depth frame between first and second depth frames.

After interpolating the first intermediate depth frame, the intermediate depth interpolator 140 may interpolate a second intermediate depth frame corresponding to the second intermediate frame by using the first intermediate depth frame, the second depth frame, a third motion vector mv3 between the first and second intermediate frames, and a fourth motion vector mv4 between the second intermediate frame and the second key frame.

In detail, the intermediate depth interpolator 140 may compare the third motion vector mv3 between the first and second intermediate frames with the fourth motion vector mv4 between the second intermediate frame and the second key frame. The intermediate depth interpolator 140 may calculate a third weight w2 of the first intermediate depth frame and a fourth weight 1-w2 of the second depth frame, according to the comparison result between the third and fourth motion vectors, mv3 and mv4. The intermediate depth interpolator 140 may reflect the third weight w2 on the first intermediate depth frame and the fourth weight 1-w2 on the second depth frame to interpolate a second intermediate depth frame between the first intermediate depth frame and the second depth frame.

Accordingly, as described with reference to FIG. 5, the intermediate depth interpolator 140 may hierarchically interpolate the first and second intermediate depth frames by using the first and second depth frames.

In the exemplary embodiments described with reference to FIGS. 4 and 5, two or three intermediate frames exist between first and second key frames, however, the present disclosure is not limited thereto. Therefore, four or more intermediate frames may exist between the first and second key frames. For example, if four intermediate frames exist between first and second key frames, the intermediate depth interpolator 140 may hierarchically interpolate second, third, first, and fourth intermediate depth frames by using the first and second key frames.

Referring to FIGS. 1 and 2 again, a 3D image generator 150 generates left and right eye images of the plurality of image frames input into the image input unit 110 by using depth frames generated by the depth frame generator 120 and intermediate depth frames interpolated by the intermediate depth interpolator 140.

In detail, the 3D image generator 150 sets the plurality of image frames to one of the left and right eye images and sets a new image frame additionally having a disparity based on depth information of each of the plurality of image frames to the other one of the left and right eye images. The 3D image generator 150 generates new left and right eye image frames of each of the plurality of image frames by using depth information corresponding to each of the plurality of image frames.

A 3D image output unit 160 alternately outputs the left and right eye images generated by the 3D image generator 150.

As described above, a display apparatus may hierarchically interpolate intermediate depth frames corresponding to intermediate frames between key frames by using depth frames corresponding to the key frames to minimize errors which may occur when interpolating the depth frames and to generate depth frames approximate to real depth frames.

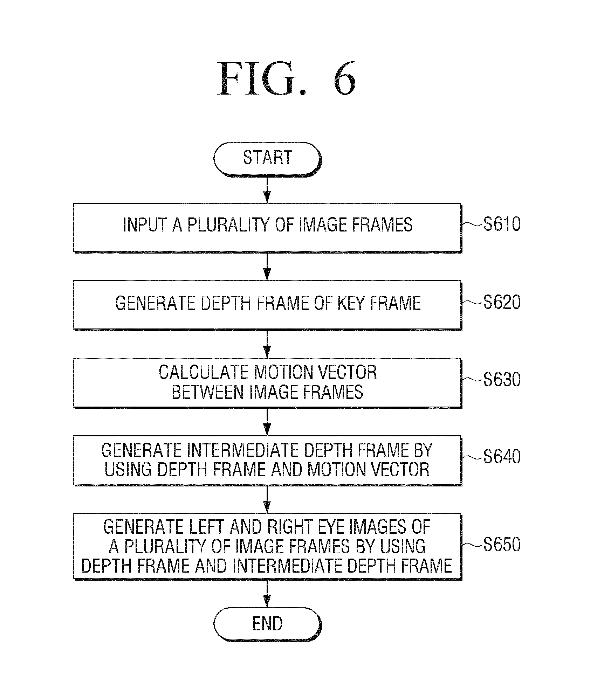

A 3D image converting method according to an exemplary embodiment of the present disclosure will now be described in detail with reference to FIG. 6.

In operation S610, the display apparatus 100, for example, may receive a plurality of image frames. For example, the plurality of image frames are 2D format image data.

In operation S620, the display apparatus 100 may generate a depth frame of a key frame. In detail, the display apparatus 100 may select a key frame from the plurality of image frames at preset frame intervals or at irregular frame intervals, depending on embodiments. The display apparatus 100 may also generate a depth frame corresponding to the key frame based on spatial characteristics of the key frame (e.g. a size, an arrangement, a motion, etc. of an object), dependent on embodiments. Alternatively, the display apparatus 100 may generate the depth frame corresponding to the key frame through an input of a user, dependent on embodiments.

In operation S630, the display apparatus 100 may calculate at least one motion vector between image frames.

In operation S640, the display apparatus 100 may generate an intermediate depth frame using the depth frame and the at least one motion vector. In detail, if image data including a first key frame, an intermediate frame, and a second key frame is received, the display apparatus 100 may compare a first motion vector mv1 between the first key frame and the intermediate frame with a second motion vector mv2 between the intermediate frame and the second key frame. The display apparatus 100 may calculate a first weight w1 of a first depth frame corresponding to the first key frame and a second weight 1-w1 of a second depth frame corresponding to the second key frame, according to the comparison result between the first and second motion vectors, i.e., mv1 and mv2. For example, the display apparatus may use Equation 1, shown above, to calculate w1. Depending on embodiments, the first and second weights w1 and 1-w1 may be respectively inversely proportional to sizes of the first and second motion vectors mv1 and mv2. The display apparatus 100 may reflect the first weight w1 on the first depth frame and the second weight 1-w1 on the second depth frame to interpolate an intermediate depth frame between the first and second depth frames.

If a plurality of intermediate frames exists between the first and second key frames, the display apparatus 100 may hierarchically interpolate intermediate depth frames corresponding to the plurality of intermediate frames as shown in FIGS. 4 and 5. In operation S650, the display apparatus 100 generates left and right eye images of the plurality of image frames by using the depth frame and the intermediate depth frame. According to a 3D image converting method as described above, a display apparatus may minimize occurrences of errors and generate a depth frame approximate to a real depth frame.

A 3D image converting method of a display apparatus according to the above-described various exemplary embodiments may be realized as a program and provided to the display apparatus.

In detail, there may be provided a non-transitory computer readable medium which stores a program including generating a depth frame of key frames of a plurality of image frames; calculating a motion vector between the image frames, interpolating an intermediate depth frame corresponding to intermediate frames of the key frames by using the depth frame and the motion vector, and generating left and right eye images of the plurality of image frames by using the depth frame and the interpolated depth frame.

The non-transitory computer readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on non-transitory computer-readable media comprising computer-readable recording media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), a USB memory, and a CD-R (Recordable)/RW.

Further, according to an aspect of the embodiments, any combinations of the described features, functions and/or operations can be provided.

Moreover, the display apparatus may include at least one processor to execute at least one of the above-described units and methods.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A 3-dimensional 3D image converting method for a display apparatus, the 3D image converting method comprising:

   generating a depth frame of key frames of a plurality of image frames;
   calculating a motion vector between the image frames;
   interpolating an intermediate depth frame corresponding to intermediate frames between the key frames by using the generated depth frame and the calculated motion vector; and
   generating left and right eye images of the plurality of image frames using the generated depth frame and the interpolated intermediate depth frame.

2. The 3D image converting method of claim 1, wherein the interpolating of the intermediate depth frame comprises:

   comparing a first motion vector between an intermediate frame between first and second key frames of the image frames and the first key frame with a second motion vector between the intermediate frame and the second key frame;
   calculating a first weight of a first depth frame corresponding to the first key frame and a second weight of a second depth frame corresponding to the second key frame according to the comparing; and
   reflecting the first weight on the first depth frame and the second weight on the second depth frame to interpolate an intermediate depth frame between the first and second depth frames.

3. The 3D image converting method of claim 2, wherein the first and second weights are respectively inversely proportional to sizes of the first and second motion vectors.

4. The 3D image converting method of any one of claims 1 through 3, wherein if a plurality of intermediate frames exist between first and second key frames, the interpolating of the intermediate depth frame comprises hierarchically interpolating intermediate depth frames corresponding to the plurality of intermediate frames.

5. The 3D image converting method of claim 4, wherein if first, second, and third intermediate frames exist between the first and second key frames, the interpolating of the intermediate depth frame comprises:

   interpolating a second intermediate depth frame corresponding to the second intermediate frame using a first depth frame corresponding to the first key frame, a second depth frame corresponding to the second key frame, a motion vector between the first key frame and the second intermediate frame, and a motion vector between the second key frame and the second intermediate frame;
   interpolating a first intermediate depth frame corresponding to the first intermediate frame using the first depth frame, the second intermediate depth frame, a motion vector between the first key frame and the first intermediate frame, and a motion vector between the second intermediate frame and the first intermediate frame; and
   interpolating a third intermediate depth frame corresponding to the third intermediate frame using the second depth frame, a second intermediate depth frame, a motion vector between the second intermediate frame and the third intermediate frame, and a motion vector between the third intermediate frame and the second key frame.

6. The 3D image converting method of claim 4, wherein if first and second intermediate frames exist between the first and second key frames, the interpolating of the intermediate depth frame comprises:

   interpolating a first intermediate depth frame corresponding to the first intermediate frame using a first depth frame corresponding to the first key frame, a second depth frame corresponding to the second key frame, a motion vector between the first key frame and the first intermediate frame, and a motion vector between the second key frame and the first intermediate frame; and
   interpolating a second intermediate depth frame corresponding to the second intermediate frame using the first intermediate depth frame, the second depth frame, a motion vector between the first and second intermediate frames, and a motion vector between the second intermediate frame and the second key frame.

7. The 3D image converting method of any one of claims 1 through 6, further comprising:

selecting one of the plurality of image frames as the key frame for every preset number of image frames.

8. A display apparatus which converts a 2-dimensional 2D image into a 3D image, the display apparatus comprising:

a depth frame generator which generates a depth frame of key frames of a plurality of image frames;
a motion vector calculator which calculates a motion vector between the image frames;
an intermediate depth interpolator which interpolates an intermediate depth frame corresponding to intermediate frames between the key frames by using the generated depth frame and the motion vector; and
a 3D image generator which generates left and right eye images of the plurality of image frames by using the generated depth frame and the interpolated intermediate depth frame.

9. The display apparatus of claim 8, wherein the intermediate depth interpolator compares a first motion vector between an intermediate frame between first and second key frames of the image frames and the first key frame with a second motion vector between the intermediate frame and the second key frame to calculate a first weight of a first depth frame corresponding to the first key frame and a second weight of a second depth frame corresponding to the second key frame and reflects the first weight on the first depth frame and the second weight on the second depth frame to interpolate an intermediate depth frame between the first and second depth frames.

10. The display apparatus of claim 9, wherein the first and second weights are respectively inversely proportional to sizes of the first and second motion vectors.

11. The display apparatus of any one of claims 8 through 10, wherein if a plurality of intermediate frames exists between first and second key frames, the intermediate depth interpolator hierarchically interpolates intermediate depth frames corresponding to the plurality of intermediate frames.

12. The display apparatus of claim 11, wherein if first, second, and third intermediate frames exist between the first and second key frames, the intermediate depth interpolator interpolates a second intermediate depth frame corresponding to the second intermediate frame using a first depth frame corresponding to the first key frame, a second depth frame corresponding to the second key frame, a motion vector between the first key frame and the second intermediate frame, and a motion vector between the second key frame and the second intermediate frame, interpolates a first intermediate depth frame corresponding to the first intermediate frame using the first depth frame, the second intermediate depth frame, a motion vector between the first key frame and the first intermediate frame, and a motion vector between the second intermediate frame and the first intermediate frame, and interpolates a third intermediate depth frame corresponding to the third intermediate frame using the second depth frame, a second intermediate depth frame, a motion vector between the second intermediate frame and the third intermediate frame, and a motion vector between the third intermediate frame and the second key frame.

13. The display apparatus of claim 11, wherein if first and second intermediate frames exist between the first and second key frames, the intermediate depth interpolator interpolates a first intermediate depth frame corresponding to the first intermediate frame using a first depth frame corresponding to the first key frame, a second depth frame corresponding to the second key frame, a motion vector between the first key frame and the first intermediate frame, and a motion vector between the second key frame and the first intermediate frame and interpolates a second intermediate depth frame corresponding to the second intermediate frame using the first intermediate depth frame the second depth frame, a motion vector between the first and second intermediate frames, and a motion vector between the second intermediate frame and the second key frame.

14. The display apparatus of any one of claims 8 through 13, wherein the depth frame generator selects one of the plurality of image frames as the key frame the every preset number of image frames to generate a depth frame.

# FIG. 1

100

# FIG. 2

# FIG. 3

| IMAGE FRAME | FIRST FIRST KEY | INTERMEDIATE KEY FRAME | SECOND KEY FRAME |
|---|---|---|---|

mv1    mv2

| DEPTH FRAME | FIRST DEPTH FRAME | | SECOND DEPTH FRAME |
|---|---|---|---|

w1    INTERMEDIATE DEPTH FRAME    (1-w1)

# FIG. 4

# FIG. 5

IMAGE
FRAME

| FIRST KEY FRAME | FIRST INTERMEDIATE FRAME | SECOND INTERMEDIATE FRAME | SECOND KEY FRAME |

mv3  mv4

mv1  mv2

DEPTH
FRAME

| FIRST DEPTH FRAME | | | SECOND DEPTH FRAME |

w1    FIRST INTERMEDIATE DEPTH FRAME    (1-w1)

w2    SECOND INTERMEDIATE DEPTH FRAME    (1-w2)

14

# FIG. 6

START

INPUT A PLURALITY OF IMAGE FRAMES ~S610

GENERATE DEPTH FRAME OF KEY FRAME ~S620

CALCULATE MOTION VECTOR
BETWEEN IMAGE FRAMES ~S630

GENERATE INTERMEDIATE DEPTH FRAME BY
USING DEPTH FRAME AND MOTION VECTOR ~S640

GENERATE LEFT AND RIGHT EYE IMAGES OF
A PLURALITY OF IMAGE FRAMES BY USING ~S650
DEPTH FRAME AND INTERMEDIATE DEPTH FRAME

END

Europäisches
Patentamt

European
Patent Office

Office européen
des brevets

# EUROPEAN SEARCH REPORT

**Application Number**

EP 13 17 7854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 229093 A (NIPPON TELEGRAPH & TELEPHONE) 12 August 2004 (2004-08-12) | 1,4-8, 11-14 | INV. H04N7/32 |
| Y | * paragraphs [0040], [0084] - [0092], [0112]; figures 1, 20, 27 * | 2,3,9,10 | H04N13/00 H04N7/46 |
| Y | JINWOOK CHOI ET AL: "2D-plus-depth based resolution and frame-rate up-conversion technique for depth video", IEEE TRANSACTIONS ON CONSUMER ELECTRONICS, IEEE SERVICE CENTER, NEW YORK, NY, US, vol. 56, no. 4, 1 November 2010 (2010-11-01), pages 2489-2497, XP011341851, ISSN: 0098-3063, DOI: 10.1109/TCE.2010.5681132 | 2,3,9,10 | |
| A | * section III.B; figure 6 * | 1,4-8, 11-14 | |
| A | US 2007/064812 A1 (BAIK HYUN-KI [KR]) 22 March 2007 (2007-03-22) * paragraphs [0052] - [0059] * | 1-14 | |
| A | MERKLE P ET AL: "Efficient Prediction Structures for Multiview Video Coding", IEEE TRANSACTIONS ON CIRCUITS AND SYSTEMS FOR VIDEO TECHNOLOGY, IEEE SERVICE CENTER, PISCATAWAY, NJ, US, vol. 17, no. 11, 1 November 2007 (2007-11-01), pages 1461-1473, XP011195138, ISSN: 1051-8215, DOI: 10.1109/TCSVT.2007.903665 * section IV.A; figure 5 * | 1-14 | **TECHNICAL FIELDS SEARCHED (IPC)** H04N |

-/--

The present search report has been drawn up for all claims

| Place of search | Date of completion of the search | Examiner |
|---|---|---|
| Munich | 31 October 2013 | Montoneri, Fabio |

EPO FORM 1503 03.82 (P04C01)

**EUROPEAN SEARCH REPORT**

Application Number

EP 13 17 7854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHENGLEI WU ET AL: "A Novel Method for Semi-automatic 2D to 3D Video Conversion", 3DTV CONFERENCE: THE TRUE VISION - CAPTURE, TRANSMISSION AND DISPLAY OF 3D VIDEO, 2008, IEEE, PISCATAWAY, NJ, USA, 28 May 2008 (2008-05-28), pages 65-68, XP031275212, ISBN: 978-1-4244-1760-5 * section 3; figure 2 * | 1-14 | |

TECHNICAL FIELDS SEARCHED (IPC)

The present search report has been drawn up for all claims

| Place of search | Date of completion of the search | Examiner |
|---|---|---|
| Munich | 31 October 2013 | Montoneri, Fabio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 17 7854

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2013

| Patent document cited in search report | | Publication date | Patent family member(s) | | Publication date |
|---|---|---|---|---|---|
| JP 2004229093 | A | 12-08-2004 | JP | 3988879 B2 | 10-10-2007 |
| | | | JP | 2004229093 A | 12-08-2004 |
| US 2007064812 | A1 | 22-03-2007 | CN | 1893665 A | 10-01-2007 |
| | | | KR | 20070003502 A | 05-01-2007 |
| | | | US | 2007064812 A1 | 22-03-2007 |

EPO FORM P0459

For more details about this annex : see Official Journal of the European Patent Office, No. 12/82